# EUROPEAN PATENT SPECIFICATION

(11) **EP 2 301 125 B1**
(45) Date of publication and mention of the grant of the patent: **30.10.2013**
(21) Application number: 08773119.6
(22) Date of filing: 07.07.2008
(51) Int. Cl.: H02H 7/26, H02H 3/06

(54) **METHOD AND SYSTEM FOR REARRANGING SOUND CONDUCTORS IN PARALLEL LINES IN POWER TRANSMISSION**
VERFAHREN UND SYSTEM ZUM UMORDNEN VON FEHLERFREIEN LEITERN IN PARALLELEN LINIEN BEI DER ENERGIEÜBERTRAGUNG
PROCÉDÉ ET SYSTÈME PERMETTANT DE RÉAGENCER DES CONDUCTEURS EN BON ÉTAT DANS DES LIGNES PARALLÈLES, LORS DE LA TRANSMISSION D ÉNERGIE

(43) Date of publication of application: 30.03.2011
(73) Proprietor: ABB Research Ltd., 8050 Zürich (CH)
(72) Inventor: FAN, Jianzhong, Beijing 100016 (CN); SU, Bin, Beijing 100016 (CN); JING, Lei, Beijing 100016 (CN); LIU, Qianjin, Beijing 100016 (CN); YANG, Ying, Beijing 100016 (CN)
(74) Representative: Zimmermann & Partner
(86) International application number: PCT/CN2008/071564
(87) International publication number: WO 2010/003281

(56) References cited:
- CN-A- 1 420 590
- CN-A- 1 588 729
- CN-A- 1 588 737
- GB-A- 350 009
- US-A- 1 715 679
- '9th The Chinese IConference on Power System Protection.', 17 March 2003 article ZHANG, BAOHUI ET AL.: 'STUDY ON ANEW TYPE OF AUTO-RECLOSING.', pages 146 - 150

## Description

### FIELD OF INVENTION

The invention relates to the field of power transmission, and more particularly to a method and system for rearranging sound conductors in parallel lines in power transmission, to form a reconstructed line for resuming power transmission of one line in the parallel lines.

### BACKGROUND OF THE INVENTION

For parallel lines, cross-line fault often happens. Generally, both lines have to be tripped if a cross-line permanent fault happens. Subsequently, the connection and power transmission are interrupted. This will have a significant impact on grid stability because parallel lines generally connect two important sub-grids or zones. Nowadays, grid is more and more complex and grid stability is crucial to utilities. It is desirable for utilities to resume grid connection and power transmission as soon as possible after a fault trip. Therefore, quick resume time and high adaptive solution are highly focused and appreciated by utilities.

A solution which is so-called 'like 3-phase operation' has been proposed for years. In this solution, if a permanent cross-line fault occurs, 3-phase operation can be resumed as long as there are 3 sound phases including a phase A, a phase B, and a phase C. Zhang Baohui et al. provide such a 'like 3-phase operation' in their thesis "Study on a New Type of Auto-Reclosing" on 9th The Chinese Conference on Power System Protection, October, 2003. However, if the number of the sound phases is less than 3, this solution is invalid. For example, for a fault IA(phase A of a line I) - IIA (phase A of a line II), there are only 2 sound phases, i.e. phase B and phase C, the 'like 3-phase operation' solution can not be used, although there are actually 4 sound conductors left, i.e. IB (phase B of the line I), IC (phase C of the line I), IIB (phase B of the line II) and IIC (phase C of the line II).

Nowadays, though the proportion of parallel lines is very small compared with the entire transmission line, the proportion will be increased rapidly in the future due to a shortage of transmission line corridor. So, the protection of parallel lines will become more and more important for the utilities in the future.

### SUMMARY OF THE INVENTION

The invention is to provide a re-arranged one line operation solution of parallel lines, i.e. a method and a system for rearranging sound conductors included in parallel lines in power transmission, so as to resume power transmission in one line of the parallel lines by using a reconstructed line.

According to an embodiment of the invention, a method for rearranging sound conductors included in parallel lines in power transmission is provided. The parallel lines comprise at least a first line and a second line each of which includes N conductors, N is an integer number greater than or equal to 3. The method may include: selecting any N sound conductors which are not included in a single line, among the 2N conductors comprised in the two lines; and connecting each of one or more unselected conductors included in the first line to a corresponding one of one or more selected sound conductors included in the second line while keeping the second line tripped, so that a reconstructed line is formed by using the N selected sound conductors to resume power transmission of the first line.

According to another embodiment of the invention, a system for rearranging sound conductors included in parallel lines in power transmission is provided. The parallel lines comprise at least a first line and a second line each of which includes N conductors, N is an integer number greater than or equal to 3. The system may include: a first outgoing switch, arranged on the first line, each pole of the first outgoing switch corresponds to a conductor of the first line; a second outgoing switch, arranged on the second line, each pole of the second outgoing switch corresponds to a conductor of the second line; a first line switch, arranged between the first outgoing switch and a breaker/current transformer of the first line; and a second line switch, arranged between the second outgoing switch and a breaker/current transformer of the second line. Each of poles of the first line switch corresponds to a conductor of the first line, and each of poles of the second line switch corresponds to a conductor of the second line, each of the poles of the first line switch corresponds to a corresponding one of the poles of the second line switch,
whereby the first and second line switch (LD1, LD2) are arranged to allow a connection between the first line (L1) and the second line (L2) by
connecting, when any N sound conductors (1B, 1C, 2C) not included in a single line are selected among 2N conductors (1A, 1B, and 1C; 2A, 2B, and 2C) included in the two lines (L1, L2), each of one or more unselected conductors (1A) included in the first line (L1) to a corresponding one (2C) of one or more selected sound conductors included in the second line (L2), so that a reconstructed line can be formed by using the N selected sound conductors (1B, 1C, 2C).

### BRIEF DESCRIPTION OF THE DRAWINGS

Figure 1 illustrates an example of the connection between two lines, a first line L1 and a second line L2, after implementing a method according to an embodiment of the invention;

Figure 2 shows the application of a **P**ost-**F**ault solution to keep the one of two connection and power transmission capacity by re-arranging sound conductors to **O**ne Line **O**peration (**PFOLO**) based on time axes according to an embodiment of the invention;

Figure 3 shows two exemplary connections including two extra line disconnectors according to an embodiment of the invention;

Figure 4 illustrates a Generic Object-Oriented Substation Event GOOSE communication architecture and data flow between control Intelligent Electronic Devices (IEDs) and protection IEDs according to an embodiment of the invention;

Figure 5 shows a basic logic flow of a master control IED according to an embodiment of the invention;

Figure 6 illustrates the process for rearranging the sound conductors to resume power transmission of a line according to an embodiment of the invention; and

Figure 7 illustrates a resulting connection after the process as shown in Figure 6 is completed.

### DESCRIPTION OF THE PREFERRED EMBODIMENTS

According to the statistic data from Japan, more than 3 conductors are sound under more than 40% of cross line faults. If three conductors can be selected from sound conductors of the parallel lines to re-arrange a sound 3 phase line, more than half of power transmission capability can be resumed, which will be highly beneficial for system stability.

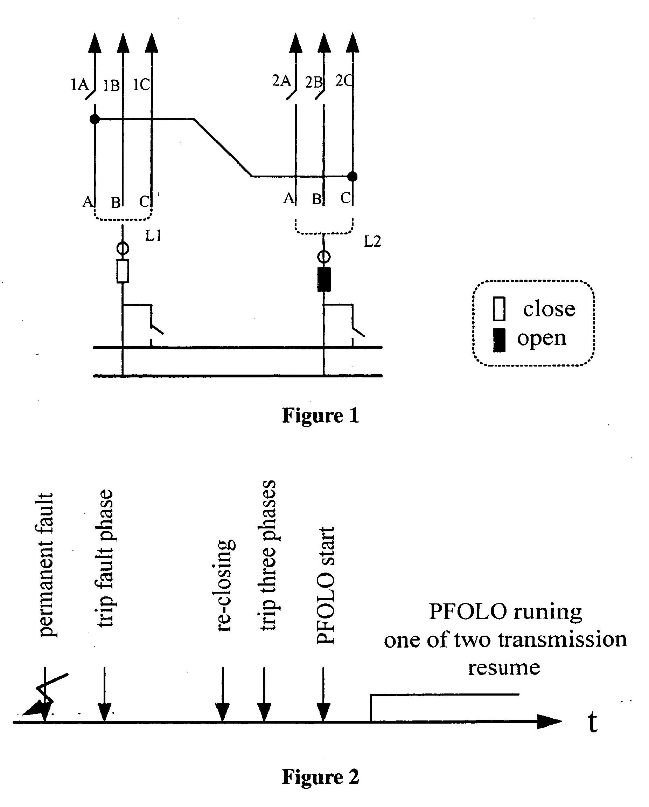

An embodiment of the invention brings forward a method for rearranging sound conductors included in parallel lines in power transmission, to form a reconstructed line so as to resume power transmission of one line in the parallel lines, for example, in the case of a permanent cross-line fault. In the embodiment, the parallel lines are supposed to comprise two lines. Figure 1 illustrates an example showing the connection between the two lines, i.e. a first line L1 and a second line L2, according to the method. Each of the two lines L1 and L2 includes at least three conductors, e.g., 1A, 1B, and 1C, or 2A, 2B, and 2C, corresponding to the three phases A, B, and C respectively. In the method for rearranging sound conductors included in parallel lines in power transmission, any three sound conductors which are not included in one line are selected among the six conductors included in the two lines (in the example as shown in Figure 1, 1B, 1C, and 2C are selected,); and one or more unselected conductors (e.g. I A as shown in Figure 1) included in the first line are connected to one or more selected sound conductors (e.g. 2C as shown in Figure 1) included in the second line, so that the power transmission of the first line L1 may be resumed by the three selected sound conductors (e.g. 1B, 1C, and 2C as shown in Figure 1). As shown in Figure 1, the second line L2 is kept tripped.

Though the parallel line is shown to include two lines in the above embodiment, a person skilled in the art shall appreciate that the invention should not be limited to this. In another embodiment of the invention, the parallel lines may include more than two lines, to which case, the technical solutions according to the embodiments of the invention may also be applied.

In addition, though three conductors are shown to be included in one line, a person skilled in the art shall appreciate that the invention should not be limited to this. In fact, N conductors (N is an integer number, N≥3) may be included in one line in the case that there are more than three phases.

In an embodiment, an outgoing switch may be arranged on each of the two lines, to control the line to be opened or not. A line switch may be arranged between the outgoing switch and a breaker/current transformer of each of the two lines, to achieve the connection between the two lines as shown in Figure 1. In an embodiment, each of the switches may be a disconnector.

Taking as an example, a **P**ost-**F**ault solution to keep the one of two connection and power transmission capacity by re-arranging sound conductors to **O**ne **L**ine **O**peration (Abbreviated as PFOLO) will be described below. Figure 2 shows the application of the PFOLO based on time axes.

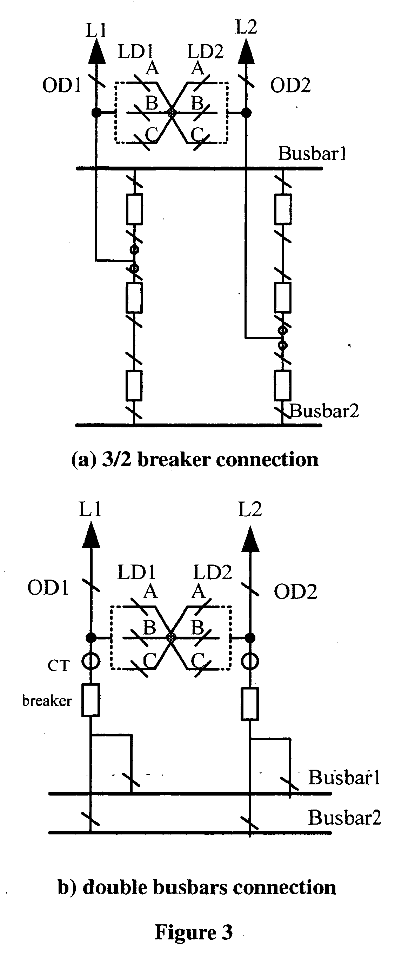

In the PFOLO, two line disconnectors (LDs) are included. Each of the LDs is arranged between an outgoing disconnector (OD) and a breaker or a current transformer (CT) if any. The two LDs share a common connecting point, and are utilized to pick out sound conductors and re-arrange the phase order to construct a sound line. Figure 3 shows two exemplary connections, in which an LD1 is arranged between an OD1 and a CT/breaker of a line L1, and an LD2 is arranged between an OD2 and a CT/breaker of a line L2. As shown in Figure 3, each of LD1 and LD2 has three poles corresponding to the three phases A, B, and C of each line..

It should be noted that though disconnectors (e.g. LD1-LD2 and OD1-OD2) are shown to be included in the example, a person skilled in the art shall appreciate that the invention should not be thus limited, instead, other types of switches may be utilized.

In another embodiment, the switches, e.g. the disconnectors LD1-LD2 and OD1-OD2 in the above example, are single-pole. Furthermore, the switches may be remote controllable.

The LD and OD of each line may be controlled by a control device of the line. For example, the control device may be a control Intelligent Electronic Device (IED).

In an embodiment, a mechanical lock may be installed in order to prevent mal-operation. The mechanical lock may guarantee only one pole of LD can be closed at any time.

Hereinafter, the control IED is taken as an example of the control device of each line. Each line's control IED is required to know both its protection output and the other line's protection and control data firstly. After getting these data, a control IED can make a decision that whether PFOLO should start or not. The data and messages may be exchanged through the communication between the control IED and a protection IED of each line, as well as between two bays. Because the amount of data to be exchanged is little; there are many available communication solutions. The hardware wiring (I/O) is a general solution which is supported by most types of IEDs. Others communication solutions, which depend on the capacity of IED, are also available, such as serial/parallel communication and TCP/IP. In the example, IEC61850 Generic Object-Oriented Substation Event (GOOSE) communication is illustrated. In the example, the IED embodies the communication solution by IEC61850 GOOSE.

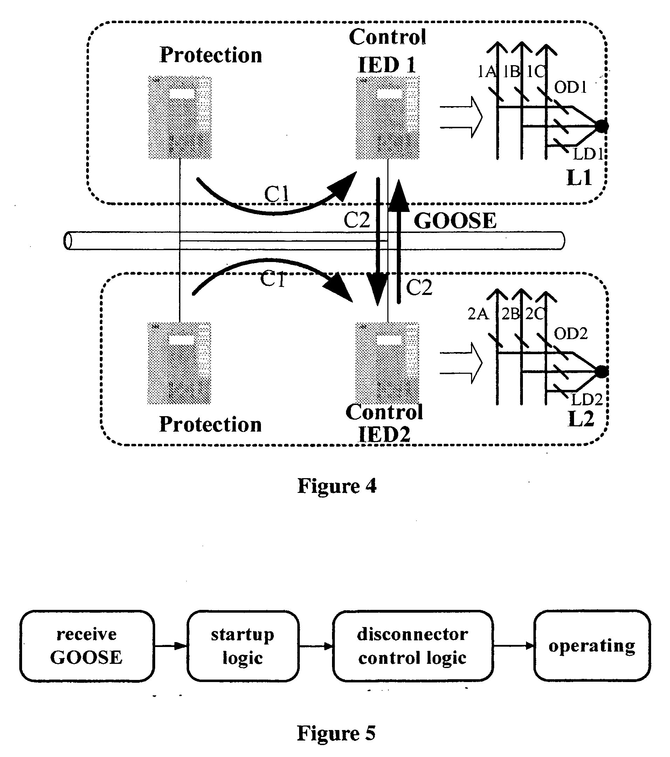

Figure 4 illustrates a GOOSE communication architecture and data flow. Here, two GOOSE communications are defined. The first communication is a multicast from a line's protection IED to control IED (represented by a reference sign C1 in Figure 4). The second communication (represented by a reference sign C2 in Figure 4) is between parallel lines. The data exchange between the parallel lines is implemented between the two line's control IEDs.

Table 1 lists the dataset member of GOOSE communication C l, in which each line's protection IED is a publisher and control IED is a subscriber.

**Table 1 Dataset member of GOOSE communication C1**

| **Index** | **Member** | **Data type** | **Purpose** |
|---|---|---|---|
| 1 | Protection general startup signal | Boolean | This signal is used to open PFOLO logic. |
| 2 | Breaker re-closing status | Boolean | Control IED can know whether the re-closing is over or disabled by this signal. This is a condition to start PFOLO logic |
| 3 | fault trip signals, phase A, phase B and phase C | Boolean | The PFOLO logic will know which phase is sound by these signals. |

Table 2 lists the dataset member of the GOOSE communication C2, in which when one line's control IED is a publisher, the other line's control IED is a subscriber. That is, each of the control IEDs is not only a publisher, but also a subscriber.

**Table 2 Dataset member of GOOSE communication C2**

| **Index** | **member** | **Data type** | **Purpose** |
|---|---|---|---|
| 1 | All members | | |
| 2 | Breaker status, phase A, phase B and phase C | Double point | Interlocking checking, PFOLO logic. |
| 3 | OD status, phase A, phase B and phase C | Boolean | Interlocking checking, PFOLO logic. |
| 4 | LD status, phase A, phase B and phase C | Boolean | Interlocking checking, PFOLO logic. |
| 5 | PFOLO operation status and order indicator | Integer | It is an enumerative variable and defined as: 0: disable, 1: startup, 2: ongoing, 3: ready, 4: running. When this signal comes from master control IED, it is an order. When this signal comes from slave control IED, it's status indicator. |

A startup and control logic is embedded in each control IEDs of the parallel lines. Here, a master and slave definition is introduced. Supposing the number of remaining sound conductors after a failure occurs is three, the line which has two sound conductors may be defined as a master line and its control IED is defined as a master control IED. Another line and its control IED are slave. If there are four sound conductors left, a preset parameter will decide which line and its control IED is master. A line's local and remote control IEDs should have a same setting. The master control IED will take charge of whole PFOLO process at each side. The main operation of control process is to open or close special phase's poles of an LD and OD.

It should be noted that though the line with more sound conductors is defined as the master line, a person skilled in the art shall appreciate that the other line having less sound conductors may also be defined as a master line as required.

The startup and control logic is executed by both of the control IEDs. If the number of the sound conductors is less than three, the logic is disabled and a PFOLO indicator is set to disable. If the received data by GOOSE shows the number of sound conductors is greater or equal to three after a fault trip, the startup and control logic start the PFOLO. After the PFOLO is started, the master control IED sends a startup command to the slave control IED. The slave control IED starts a local disconnector control process. At the same time, the master control IED also starts a local disconnectors control process. The main operation of the control processes is to open or close special phase's poles of an LD and OD. After these operations are finished, the master line's breaker is closed and the PFOLO is put into operation.

The startup and control logic is in operation in only a certain period for reliability. The trigger signal for the logic is the general protection startup signals of the two lines. An additional condition is that there is no further re-closing and no potential overload. Here, grid security is also taken into account in the startup logic by master control IED. In an embodiment, a mechanism is introduced to check whether the re-constructed line is overloaded if PFOLO is put into operation. If a line load before fault is below a settable percentage, for example, 55%∼60%, of rating load, the logic will output TRUE. Otherwise, the logic will be blocked.

Figure 5 shows a basic logic flow of a master control IED.

Then, the PFOLO is started by a series of automatic sequential disconnector close & open orders, in order to resume operation of one line of the parallel lines. Each of the control IEDs is adapted to execute all close or open commands related to its own OD and LD.

For simplicity, we suppose the number of sound conductors in the parallel lines is four, Phase A (1A) of line 1, i.e. L1, is a fault phase and phase B (2B) of line 2, i.e. L2, is a fault phase. For example, Line 1 is defined as the master line.

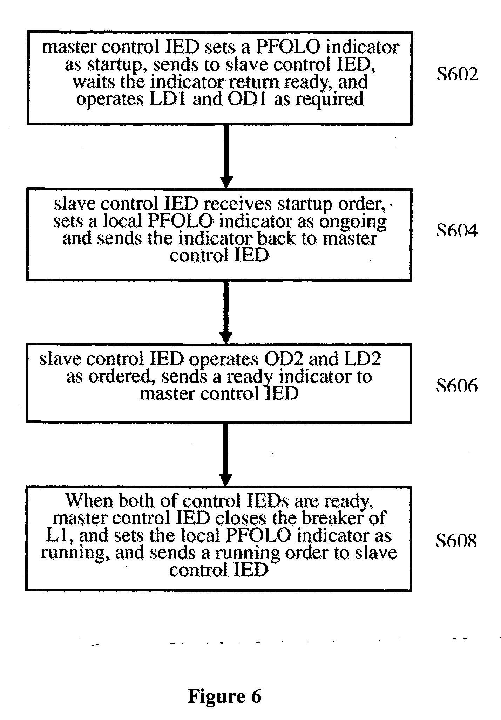

Figure 6 illustrates the process for rearranging the sound conductors to resume power transmission of Line 1. As shown in Figure 5, the PFOLO is started by the following steps S602-S608.

S602, the master control IED sets a PFOLO indicator as ***startup,*** sends the indicator to the slave control IED, and waits the indicator return ***ready.***

At the same time, the master control IED starts a local disconnector control to open the phase A pole of OD1, and close the phase A pole of LD1. Then, a local PFOLO indicator will be set as ***ready.***

S604, when receiving a startup order, the slave control IED sets a local PFOLO indicator as ongoing and sends the indicator back to the master control IED.

S606, the slave control IED opens the phase A and phase B poles of OD2 while keeping the phase C pole of OD2 closed, and closes the phase C pole of LD2, sends a ready indicator to the master control IED. Here, the phase C sound conductor of L2 is selected among the phase A and phase C sound conductors of L2. Of course, the phase A sound conductor of L2 may also be chosen to reconstruct a sound line alternatively. If there are only three, instead of four, sound conductors in the two lines L1 and L2, there is no the second choice, and the three sound conductors will be used to reconstruct a sound line.

S608, when both of the control IEDs' PFOLO indicator are ready, the master control IED closes the breaker of L1, and sets the local PFOLO indicator as running, and sends a running order to the slave control IED.

In an embodiment, all the disconnector operations can be done at the same time, so as to shorten the operation time. The Control IED may send out orders while verifying the disconnectors' status. In another embodiment, to ensure the grid security, the disconnector operations can be done sequentially. The status of the disconnectors (switches) may be verified whenever an operation is finished. If the verification shows that the operation is correct, the next operation is performed; otherwise, the status of the disconnectors will return to their initial status.

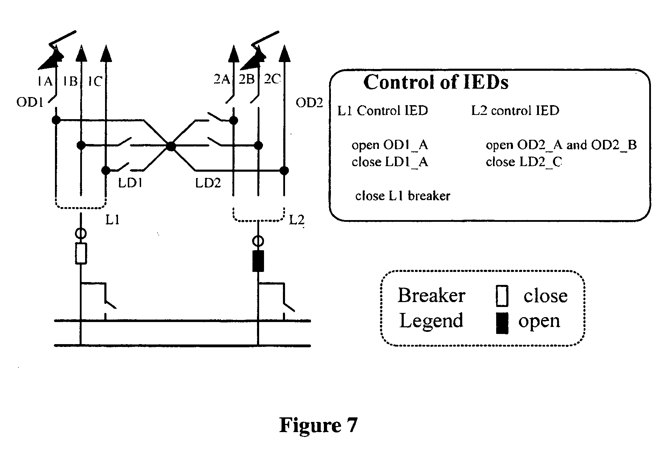

Figure 7 illustrates a resulting connection after the process as shown in Figure 6 is completed.

The process to resume the parallel lines operation when the faults are eliminated is similar to the above process but the step order is reversal.

In an embodiment, an interlocking logic about the breaker, LD and OD of one line, as well as the OD of another line, may be utilized. The interlocking logic includes a series interlocking rules which can prevent mal-operations, such as two poles of LD closed at same side, from happening. The interlocking logic may be embedded in each of the control IEDs. Due to the extra disconnectors (e.g. LD1 and LD2) added, the original interlocking logic may be updated and the new interlocking rules may be added. Alternatively, the interlocking logic may be implemented in a separate device.

The additional interlocking rules include:

1) at any time, only one pole of an LD can be closed at each side;

2) before operating an LD and an OD, the breaker must be opened first;

3) if an LD is closed and the line corresponding to the LD is slave, the breaker of the line is not allowed to be closed;

4) if a line is a master line, the same phase pole of the OD and LD of the master line cannot be closed simultaneously at any time.

With the method according to the embodiments of the invention, the power transmission of one line in parallel lines may be resumed in the case of a permanent line fault, as long as there are three or more sound conductors remained in the parallel lines, which is very simple to implement.

In some embodiments, two extra disconnectors are introduced, which are behind the breaker/CT. Therefore, the method may be utilized based on the existing protection, and the impact on the existing protection algorithm and setting may be minimized. So, this is just like an one line operation for protection.

In some embodiments, the Intelligent electric device (IED) is utilized, which provides automatic sequential control. In this way, the whole process can be finished automatically rapidly, for example, in several seconds, without any manual intervention.

In some embodiments, the high speed communication IEC61850 GOOSE is utilized, which implement communication between two bays without any hardware wiring.

In the embodiments of the invention, the communication between two substations is unnecessary. Here, the supposed precondition is that both ends of the parallel lines use current differential protection and no error trip happens. Based on this supposition, the solutions of the invention can be adapted to both sides of the parallel lines without any extra work.

In some embodiments the method is shown to be applied when a line fault occurs, in fact, the method may find wider applications. For example, it may also be applied to normal line maintenance application.

In some embodiments, the method takes into account the grid security.

In some embodiments as described above, the method is implemented automatically, for example, by using control IEDs which support GOOSE communication and have the programmable logic functions. In some other embodiments, the method can be done manually. For example, the above described switches (e.g. disconnectors) may be operated manually. Alternatively, the connection may be implemented by use of any appropriate wires instead of line switches (e.g. line disconnectors).

The solutions according to the embodiments are high market-driven solutions, and may be put in use in a variety of target markets, for example, 220kV and higher voltage level transmission line in China.

Though the present invention has been described on the basis of some preferred embodiments, those skilled in the art should appreciate that those embodiments should by no way limit the scope of the present invention. Without departing from the concept of the present invention, any variations and modifications to the embodiments should be within the apprehension of those with ordinary knowledge and skills in the art, and therefore fall in the scope of the present invention which is defined by the accompanied claims.

## Claims

1. A method for rearranging sound conductors included in parallel lines in power transmission, wherein the parallel lines comprise at least a first line (L1) and a second line (L2) each of which includes N conductors (1A, 1B, and 1C; or, 2A, 2B, and 2C), N is an integer number greater than or equal to 3, the method comprises:
selecting any N sound conductors (1B, 1C, 2C) which are not included in a single line, among the 2N conductors (1A, 1B, and 1C; 2A, 2B, and 2C) included in the two lines (L1, L2); and
connecting each of one or more unselected conductors (1A) included in the first line (L1) to a corresponding one of one or more selected sound conductors (2C) included in the second line (L2) while keeping the second line (L2) tripped, so that a reconstructed line is formed by using the N selected sound conductors (1B, 1C, 2C) to resume power transmission of the first line (L1).

2. The method of claim 1, wherein a first line switch (LD1) is arranged behind a breaker/current transformer of the first line (L1) and a second line switch (LD2) is arranged behind a breaker/current transformer of the second line (L2), such that each pole of the first line switch (LD1) corresponds to a conductor of the first line (L1), and each pole of the second line switch (LD2) corresponds to a conductor of the second line (L2), each of one or more poles of the first line switch (LD1) corresponding to the one or more unselected conductors (1A) in the first line (L1) is connected to a corresponding one of one or more poles of the second line switch (LD2) corresponding to the one or more selected conductors (2C) in the second line (L2),
the connecting each of one or more unselected conductors (1A) included in the first line (L1) to a corresponding one of one or more selected sound conductors (2C) included in the second line (L2) comprises:
closing the one or more poles of the first line switch (LD1) corresponding to the one or more unselected conductors (1A) in the first line (L1) while keeping the other poles of the first line switch (LD1) opened, and closing the one or more poles of the second line switch (LD2) corresponding to the one or more selected conductors (2C) in the second line (L2) while keeping the other poles of the second line switch (LD2) opened.

3. The method of claim 2, wherein a first outgoing switch (OD1) is arranged behind the first line switch (LD1) on the first line (L1), and a second outgoing switch (OD2) is arranged behind the second line switch (LD2) on the second line (L2),
each pole of the first outgoing switch (OD1) corresponds to a conductor of the first line (L1), and each pole of the second outgoing switch (OD2) corresponds to a conductor of the second line (L2),
when connecting each of one or more unselected conductors (1A) included in the first line (L1) to a corresponding one of one or more selected sound conductors (2C) included in the second line (L2), one or more poles of the first outgoing switch (OD1) corresponding to the one or more unselected conductors (1A) of the first line (L1) are opened while the other poles of the first outgoing switch (OD1) are closed, one or more poles of the second outgoing switch (OD2) corresponding to the one or more selected conductors (2C) of the second line (L2) are closed while the other poles of the second outgoing switch (OD2) are opened.

4. The method of claim 3, wherein the first and second outgoing switches (OD1, OD2) are single-pole and remote controllable.

5. The method of any one of claims 2 to 4, wherein the first and second line switches (LD1, LD2) are single-pole and remote controllable.

6. The method of any one of claims 3 to 5, wherein the first line switch (LD1) and the first outgoing switch (OD1) are controlled by a first control device arranged on the first line, and the second line switch (LD2) and the second outgoing switch (OD2) are controlled by a second control device arranged on the second line, the first control device and the second control device communicate with each other to control the switches (LD1, LD2, OD1, OD2) cooperatively.

7. The method of claim 6, wherein the communication between the first control device and second control device is conducted via IEC61650 Generic Objected-Oriented Substation Event (GOOSE), or serial/parallel communication, or Transmission Control Protocol/Internet Protocol (TCP/IP), or hard wiring between the devices.

8. The method of claim 6 or 7, the first control device (IED1) and the second control device (IED2) are intelligent electronic devices.

9. The method of any one of claims 6 to 8, wherein an interlocking logic is utilized by each of the control devices, to guarantee that
each of the breakers is opened before operating the switches (LD1, LD2, OD1, OD2);
if the second line switch (LD2) is closed, the breaker of the second line (L2) is not allowed to be closed; and
a pole of the first line switch (LD1) and a pole of the first outgoing switch (OD1) which correspond to a same conductor of the first line (L1) are not allowed to be closed at the same time.

10. The method of claim 9, wherein each of the switches (LD1, LD2, OD1, OD2) is a disconnector, the interlocking logic is further adapted to guarantee that
only one pole of each of the line disconnectors (LD1, LD2) can be closed at each side at any time.

11. A system for rearranging sound conductors included in parallel lines in power transmission, wherein the parallel lines comprise at least a first line (L1) and a second line (L2) each of which includes N conductors (1A, 1B, and 1C; 2A, 2B, and 2C), N is an integer number greater than or equal to 3, the system comprises:
a first outgoing switch (OD1), arranged on the first line (L1), each pole of the first outgoing switch (OD1) corresponds to a conductor of the first line (L1), to control the first line (L1) to be opened or not;
a second outgoing switch (OD2), arranged on the second line (L2), each pole of the second outgoing switch (OD2) corresponds to a conductor of the second line (L2), to control the second line (L2) to be opened or not;
a first line switch (LD1), arranged between the first outgoing switch (OD1) and a breaker/current transformer of the first line (L1); and
a second line switch (LD2), arranged between the second outgoing switch (OD2) and a breaker/current transformer of the second line (L2),
wherein each of poles of the first line switch (LD1) corresponds to a conductor of the first line (L1), and each of poles of the second line switch (LD2) corresponds to a conductor of the second line (L2), each of the poles of the first line switch (LD1) corresponds to a corresponding one of the poles of the second line switch (LD2), whereby
the first and second line switch (LD1, LD2) are arranged to allow a connection between the first line (L1) and the second line (L2) by
connecting, when any N sound conductors (1B, 1C, 2C) not included in a single line are selected among 2N conductors (1A, 1B, and 1C; 2A, 2B, and 2C) included in the two lines (L1, L2), each of one or more unselected conductors (1A) included in the first line (L1) to a corresponding one (2C) of one or more selected sound conductors included in the second line (L2), so that a reconstructed line can be formed by using the N selected sound conductors (1B, 1C, 2C).

12. The system of claim 11, wherein the first and second line switches (LD1, LD2), and the first and second outgoing switches (OD1, OD2) are single-pole and remote controllable.

13. The system of claim 11 or 12, further comprising:
a first control device, arranged on the first line, adapted to control the first line switch (LD1) and the first outgoing switch (OD1); and
a second control device, arranged on the second line, adapted to control the second line switch (LD2) and the second outgoing switch (OD2),
wherein the first control device and the second control device communicate with each other to control the switches (LD1, LD2, OD1, OD2) cooperatively.

14. The system of claim 13, wherein the communication between the first control device and second control device is conducted via IEC61650 Generic Objected-Oriented Substation Event (GOOSE), or serial/parallel communication, or Transmission Control Protocol/Internet Protocol (TCP/IP), or hard wiring between the devices.

15. The system of any one of claims 11 to 14, further comprising an interlocking logic, adapted to be utilized by each of the control devices to guarantee that
only one pole of each of the line switches (LD1, LD2) can be closed at each side at any time;
each of the breakers is opened before the switches (LD1, LD2, OD1, OD2) are operated;
if the second line switch (LD2) is closed, the breaker of the second line (L2) is not allowed to be closed; and
a pole of the first line switch (LD1) and a pole of the first outgoing switch (OD1) which correspond to a same conductor of the first line (L1) are not allowed to be closed at the same time.

## Patentansprüche

1. Verfahren zum Umordnen von in parallelen Strecken enthaltenen fehlerfreien Leitern bei einer Energieübertragung, wobei die parallelen Strecken mindestens eine erste Strecke (L1) und eine zweite Strecke (L2) umfassen, wovon jede N Leiter (1A, 1B und 1C; oder 2A, 2B und 2C) enthält, wobei N eine ganze Zahl größer als oder gleich 3 ist, wobei das Verfahren umfasst:
Auswählen von beliebigen N fehlerfreien Leiter (1 B, 1C, 2C), die nicht in einer einzelnen Strecke enthalten sind, unter den 2N Leitern (1 A, 1 B und 1C; 2A, 2B und 2C), die in den zwei Strecken (L1, L2) enthalten sind; und
Anschließen von jeweils einem oder mehreren nicht ausgewählten Leiter/n (1 A), der /die in der ersten Strecke (L1) enthalten ist/sind, an einen entsprechenden oder mehrere entsprechende fehlerfreie Leiter (2C), der/die in der zweiten Strecke (L2) enthalten ist/sind, währen die zweite Strecke (L2) abgeschaltet gehalten wird, so dass eine rekonstruierte Strecke gebildet wird, indem die N ausgewählten fehlerfreien Leiter (1 B, 1C, 2C) zur Übernahme einer Energieübertragung der ersten Strecke (L1) verwendet werden.

2. Verfahren nach Anspruch 1, wobei ein erster Netzschalter (LD1) hinter einem Unterbrecher/Stromwandler der ersten Strecke (L1) angeordnet ist, und ein zweiter Netzschalter (LD2) hinter einem Unterbrecher/Stromwandler der zweiten Strecke (L2) angeordnet ist, derart, dass jeder Pol des ersten Netzschalters (LD1) einem Leiter der ersten Strecke (L1) entspricht, und jeder Pol des zweiten Netzschalters (LD2) einem Leiter der zweiten Strecke (L2) entspricht, wobei jeweils ein oder mehrere Pol/e des ersten Netzschalters (LD1), der/die dem einen oder den mehreren nicht ausgewählten Leitern (1 A) in der ersten Strecke (L1) entspricht/entsprechen, an einen entsprechenden oder mehrere entsprechende Pole des zweiten Netzschalters (LD2) angeschlossen ist/sind, der/die dem einen oder den mehreren ausgewählten Leiter/n (2C) in der zweiten Strecke entspricht/entsprechen,
wobei das Anschließen eines nicht ausgewählten Leiters oder mehrerer nicht ausgewählter Leiter (1 A), der/die in der ersten Strecke (L1) enthalten ist/sind, an einen entsprechenden ausgewählten fehlerfreien oder mehrere entsprechende ausgewählte fehlerfreie Leiter (2C), der/die in der zweiten Strecke (L2) enthalten ist/sind, umfasst:
Schließen des einen Pols oder der mehreren Pole des ersten Netzschalters (LD1), der/die dem einen oder den mehreren nicht ausgewählten Leiter/n (1 A) in der ersten Strecke (L1) entspricht/entsprechen, während die andere Pole des ersten Netzschalters (LD1) offen gehalten werden, und Schließen des einen Pols oder der mehreren Pole des zweiten Netzschalters (LD2), der/die dem einen oder den mehreren ausgewählten Leiter/n (2C) in der zweiten Strecke (L2) entspricht/entsprechen, während die anderen Pole des zweiten Netzschalters (LD2) offen gehalten werden.

3. Verfahren nach Anspruch 2, wobei ein erster Abgangsschalter (OD1) hinter dem ersten Netzschalter (LD1) auf der ersten Strecke (L1) angeordnet ist, und ein zweiter Abgangsschalter (OD2) hinter dem zweiten Netzschalter (LD2) auf der zweiten Strecke (L2) angeordnet ist,
wobei jeder Pol des ersten Abgangsschalters (OD1) einem Leiter der ersten Strecke (L1) entspricht, und jeder Pol des zweiten Abgangsschalters (OD2) einem Leiter der zweiten Strecke (L2) entspricht,
wobei, wenn jeweils ein nicht ausgewählter oder mehrere nicht ausgewählte Leiter (1 A), der/die in der ersten Strecke (L1) enthalten ist/sind, an einen entsprechenden ausgewählten fehlerfreien oder mehrere entsprechende ausgewählte fehlerfreie Leiter (2C) angeschlossen wird/werden, der/die in der zweiten Strecke (L2) enthalten ist/sind, ein oder mehrere Pol/e des ersten Abgangsschalters (OD1), der/die dem einen oder den mehreren nicht ausgewählten Leiter/n (1A) der ersten Strecke (L1) entspricht/entsprechen, geöffnet werden, während die anderen Pole des ersten Abgangsschalters (OD1) geschlossen werden, wobei ein oder mehrere Pol/e des zweiten Abgangsschalters (OD2), der/die dem einen oder den mehreren ausgewählten Leiter/n (2C) der zweiten Strecke (L2) entspricht/entsprechen, geschlossen werden, während die anderen Pole des zweiten Abgangsschalters (OD2) geöffnet werden.

4. Verfahren nach Anspruch 3, wobei der erste und zweite Abgangsschalter (OD1, OD2) einpolig und fernsteuerbar sind.

5. Verfahren nach einem der Ansprüche 2 bis 4, wobei der erste und zweite Netzschalter (LD1, LD2) einpolig und fernsteuerbar sind.

6. Verfahren nach einem der Ansprüche 3 bis 5, wobei der erste Netzschalter (LD1) und der erste Abgangsschalter (OD1) durch eine erste Steuervorrichtung gesteuert werden, die auf der ersten Strecke angeordnet ist, und der zweite Netzschalter (LD2) und der zweite Abgangsschalter (OD2) durch eine zweite Steuervorrichtung gesteuert werden, die auf der zweiten Strecke angeordnet ist, wobei die erste Steuervorrichtung und die zweite Steuervorrichtung miteinander kommunizieren, um die Schalter (LD1, LD2, OD1, OD2) gemeinsam zu steuern.

7. Verfahren nach Anspruch 6, wobei die Kommunikation zwischen der ersten Steuervorrichtung und der zweiten Steuervorrichtung über IEC61650 Generic Object-Oriented Substation Event (GOOSE) (generische, objektorientierte Schaltanlagenereignissteuerung) oder serielle/parallele Kommunikation oder Transmission Control Protocol/Internet Protocol (TCP/IP) oder eine Festverdrahtung zwischen den Vorrichtungen erfolgt.

8. Verfahren nach Anspruch 6 oder 7, wobei es sich bei der ersten Steuervorrichtung (IED1) und der zweiten Steuervorrichtung (IED2) um intelligente elektronische Vorrichtungen handelt.

9. Verfahren nach einem der Ansprüche 6 bis 8, wobei eine Verriegelungslogik durch jede der Steuervorrichtungen genutzt wird, um sicherzustellen, dass
jeder der Unterbrecher geöffnet ist, bevor die Schalter (LD1, LD2, OD1, OD2) betätigt werden;
wenn der zweite Netzschalter (LD2) geschlossen ist, sich der Unterbrecher der zweiten Strecke (L2) nicht schließen darf; und
ein Pol des ersten Netzschalters (LD1) und ein Pol des ersten Abgangsschalters (OD1), die ein und demselben Leiter der ersten Strecke (L1) entsprechen, sich nicht gleichzeitig schließen dürfen.

10. Verfahren nach Anspruch 9, wobei jeder der Schalter (LD1, LD2, OD1, OD2) ein Trennschalter ist, wobei die Verriegelungslogik darüber hinaus dazu angepasst ist, sicherzustellen, dass
immer nur ein Pol jedes der Streckentrennschalter (LD1, LD2) auf jeder Seite geschlossen werden kann.

11. System zum Umordnen von in parallelen Strecken enthaltenen fehlerfreien Leitern bei einer Energieübertragung, wobei die parallelen Strecken mindestens eine erste Strecke (L1) und eine zweite Strecke (L2) umfassen, wovon jede N Leiter (1A, 1B und 1C; oder 2A, 2B und 2C) enthält, wobei N eine ganze Zahl größer als oder gleich 3 ist, wobei das System umfasst:
einen ersten Abgangsschalter (OD1), der auf der ersten Strecke (L1) angeordnet ist, wobei jeder Pol des ersten Abgangsschalters (OD1) einem Leiter der ersten Strecke (L1) entspricht, um die erste Strecke (L1) so zu steuern, dass sie geöffnet ist oder nicht;
einen zweiten Abgangsschalter (OD2), der auf der zweiten Strecke (L2) angeordnet ist, wobei jeder Pol des zweiten Abgangsschalters (OD2) einem Leiter der zweiten Strecke (L2) entspricht, um die zweite Strecke (L2) so zu steuern, dass sie geöffnet ist oder nicht;
einen ersten Netzschalter (LD1), der zwischen dem ersten Abgangsschalter (OD1) und einem Unterbrecher/Stromwandler der ersten Strecke (L1) angeordnet ist; und
einen zweiten Netzschalter (LD2), der zwischen dem zweiten Abgangsschalter (OD2) und einem Unterbrecher/Stromwandler der zweiten Strecke (L2) angeordnet ist,
wobei jeder der Pole des ersten Netzschalters (LD1) einem Leiter der ersten Strecke (L1) entspricht, und jeder der Pole des zweiten Netzschalters (LD2) einem Leiter der zweiten Strecke (L2) entspricht, jeder der Pole des ersten Netzschalters (LD1) einem entsprechenden der Pole des zweiten Netzschalters (LD2) entspricht, wobei
der erste und zweite Netzschalter (LD1, LD2) angeordnet sind, um eine Verbindung zwischen der ersten Strecke (L1) und der zweiten Strecke (L2) zuzulassen durch
Anschließen, wenn beliebige N fehlerfreie Leiter (1B, 1C, 2C), die nicht in einer einzelnen Strecke enthalten sind, unter 2N Leitern (1 A, 1 B und 1C; 2A, 2B und 2C), die in den zwei Strecken (L1, L2) enthalten sind, ausgewählt werden, jeweils eines nicht ausgewählten Leiters oder mehrerer nicht ausgewählter Leiter (1 A), der/die in der ersten Strecke (L1) enthalten ist/sind, an einen entsprechenden (2C) von einem oder mehreren ausgewählten fehlerfreien Leiter/n, der /die in der zweiten Strecke (L2) enthalten ist/sind, so dass eine rekonstruierte Strecke gebildet werden kann, indem die N ausgewählten fehlerfreien Leiter (1B, 1C, 2C) verwendet werden.

12. System nach Anspruch 11, wobei der erste und zweite Netzschalter (LD1, LD2) und der erste und zweite Abgangsschalter (OD1, OD2) einpolig und fernsteuerbar sind.

13. System nach Anspruch 11 oder 12, darüber hinaus umfassend:
eine auf der ersten Strecke angeordnete erste Steuervorrichtung, die zum Steuern des ersten Netzschalters (LD1) und des ersten Abgangsschalters (OD1) angepasst ist; und
eine auf der zweiten Strecke angeordnete zweite Steuervorrichtung, die zum Steuern des zweiten Netzschalters (LD2) und des zweiten Abgangsschalters (OD2) angepasst ist,
wobei die erste Steuervorrichtung und die zweite Steuervorrichtung miteinander kommunizieren, um die Schalter (LD1, LD2, OD1, OD2) gemeinsam zu steuern.

14. System nach Anspruch 13, wobei die Kommunikation zwischen der ersten Steuervorrichtung und der zweiten Steuervorrichtung über IEC61650 Generic Object-Oriented Substation Event (GOOSE) (generische, objektorientierte Schaltanlagenereignissteuerung) oder serielle/parallele Kommunikation oder Transmission Control Protocol/Internet Protocol (TCP/IP) oder eine Festverdrahtung zwischen den Vorrichtungen erfolgt.

15. System nach einem der Ansprüche 11 bis 14, darüber hinaus eine Verriegelungslogik umfassend, die dazu angepasst ist, durch jede der Steuervorrichtungen genutzt zu werden, um sicherzustellen, dass
immer nur ein Pol jedes der Streckentrennschalter (LD1, LD2) auf jeder Seite geschlossen werden kann;
jeder der Unterbrecher geöffnet ist, bevor die Schalter (LD1, LD2, OD1, OD2) betätigt werden;
wenn der zweite Netzschalter (LD2) geschlossen ist, sich der Unterbrecher der zweiten Strecke (L2) nicht schließen darf; und
ein Pol des ersten Netzschalters (LD1) und ein Pol des ersten Abgangsschalters (OD1), die ein und demselben Leiter der ersten Strecke (L1) entsprechen, sich nicht gleichzeitig schließen dürfen.

## Revendications

1. Procédé permettant de réagencer des conducteurs en bon état inclus dans des lignes parallèles lors de la transmission d'énergie, les lignes parallèles comprenant au moins une première ligne (L1) et une deuxième ligne (L2) dont chacune inclut N conducteurs (1A, 1B, et 1C ; ou 2A, 2B, et 2C), N étant un nombre entier supérieur ou égal à 3, le procédé comprenant :
la sélection de N quelconques conducteurs en bon état (1B, 1C, 2C) qui ne sont pas inclus dans une seule ligne, parmi les 2N conducteurs (1 A, 1B, et 1C ; 2A, 2B, et 2C) inclus dans les deux lignes (L1, L2) ; et
la connexion de chacun d'un ou de plusieurs conducteurs non sélectionnés (1A) inclus dans la première ligne (L1) à un correspondant d'un ou de plusieurs conducteurs en bon état sélectionnés (2C) inclus dans la deuxième ligne (L2) tout en maintenant la deuxième ligne (L2) déclenchée, de sorte qu'une ligne reconstruite soit formée moyennant les N conducteurs en bon état sélectionnés (1B, 1C, 2C) pour reprendre la transmission d'énergie de la première ligne (L1).

2. Le procédé de la revendication 1, dans lequel un premier commutateur de ligne (LD1) est disposé derrière un disjoncteur/transformateur de courant de la première ligne (L1) et un deuxième commutateur de ligne (LD2) est disposé derrière un disjoncteur/transformateur de courant de la deuxième ligne (L2), de sorte que chaque pôle du premier commutateur de ligne (LD1) corresponde à un conducteur de la première ligne (L1), et chaque pôle du deuxième commutateur de ligne (LD2) corresponde à un conducteur de la deuxième ligne (L2), chacun d'un ou de plusieurs pôles du premier commutateur de ligne (LD1) correspondant à l'un ou aux plusieurs conducteurs non sélectionnés (1 A) dans la première ligne (L1) soit connecté à un correspondant d'un ou de plusieurs pôles du deuxième commutateur de ligne (LD2) correspondant à l'un ou aux plusieurs conducteurs sélectionnés (2C) dans la deuxième ligne (L2),
la connexion de chacun d'un ou de plusieurs conducteurs non sélectionnés (1A) inclus dans la première ligne (L1) à un correspondant d'un ou de plusieurs conducteurs en bon état sélectionnés (2C) inclus dans la deuxième ligne (L2) comprend :
la fermeture de l'un ou des plusieurs pôles du premier commutateur de ligne (LD1) correspondant à l'un ou aux plusieurs conducteurs non sélectionnés (1 A) dans la première ligne (L1) tout en maintenant les autres pôles du premier commutateur de ligne (LD1) ouverts, et la fermeture de l'un ou des plusieurs pôles du deuxième commutateur de ligne (LD2) correspondant à l'un ou aux plusieurs conducteurs sélectionnés (2C) dans la deuxième ligne (L2) tout en maintenant les autres pôles du deuxième commutateur de ligne (LD2) ouverts.

3. Le procédé de la revendication 2, dans lequel un premier commutateur de départ (OD1) est disposé derrière le premier commutateur de ligne (LD1) sur la première ligne (L1), et un deuxième commutateur de départ (OD2) est disposé derrière le deuxième commutateur de ligne (LD2) sur la deuxième ligne (L2),
chaque pôle du premier commutateur de départ (OD1) correspond à un conducteur de la première ligne (L1), et chaque pôle du deuxième commutateur de départ (OD2) correspond à un conducteur de la deuxième ligne (L2),
lors de la connexion de chacun d'un ou de plusieurs conducteurs non sélectionnés (1A) inclus dans la première ligne (L1) à un correspondant d'un ou de plusieurs conducteurs en bon état sélectionnés (2C) inclus dans la deuxième ligne (L2), un ou plusieurs pôles du premier commutateur de départ (OD1) correspondant à l'un ou aux plusieurs conducteurs non sélectionnés (1 A) de la première ligne (L1) sont ouverts tandis que les autres pôles du premier commutateur de départ (OD1) sont fermés, un ou plusieurs pôles du deuxième commutateur de départ (OD2) correspondant à l'un ou aux plusieurs conducteurs sélectionnés (2C) de la deuxième ligne (L2) sont fermés tandis que les autres pôles du deuxième commutateur de départ (OD2) sont ouverts.

4. Le procédé de la revendication 3, dans lequel le premier et le deuxième commutateur de départ (OD1, OD2) sont unipolaires et commandables à distance.

5. Le procédé de l'une quelconque des revendications 2 à 4, dans lequel le premier et le deuxième commutateur de ligne (LD1, LD2) sont unipolaires et commandables à distance.

6. Le procédé de l'une quelconque des revendications 3 à 5, dans lequel le premier commutateur de ligne (LD1) et le premier commutateur de départ (OD1) sont commandés par un premier dispositif de commande disposé sur la première ligne, et le deuxième commutateur de ligne (LD2) et le deuxième commutateur de départ (OD2) sont commandés par un deuxième dispositif de commande disposé sur la deuxième ligne, le premier dispositif de commande et le deuxième dispositif de commande communiquent l'un avec l'autre pour commander les commutateurs (LD1, LD2, OD1, OD2) en coopération.

7. Le procédé de la revendication 6, dans lequel la communication entre le premier dispositif de commande et le deuxième dispositif de commande est effectuée via CEI 61650 Generic Objected-Oriented Substation Event (GOOSE) (événement générique de poste orienté objet), ou communication série/parallèle, ou Transmission Control Protocol/Internet Protocol (TCP/IP), ou câblage réel entre les dispositifs.

8. Le procédé de la revendication 6 ou 7, dans lequel le premier dispositif de commande (IED1) et le deuxième dispositif de commande (IED2) sont des dispositifs électroniques intelligents.

9. Le procédé de l'une quelconque des revendications 6 à 8, dans lequel une logique de verrouillage est utilisée par chacun des dispositifs de commande, pour garantir que
chacun des disjoncteurs est ouvert avant l'actionnement des commutateurs (LD1, LD2, OD1, OD2) ;
si le deuxième commutateur de ligne (LD2) est fermé, le disjoncteur de la deuxième ligne (L2) n'a pas le droit d'être fermé ; et
un pôle du premier commutateur de ligne (LD1) et un pôle du premier commutateur de départ (OD1) qui correspondent à un même conducteur de la première ligne (L1) n'ont pas le droit d'être fermés en même temps.

10. Le procédé de la revendication 9, dans lequel chacun des commutateurs (LD1, LD2, OD1, OD2) est un sectionneur, la logique de verrouillage est en outre adaptée pour garantir que
seul un pôle de chacun des sectionneurs de ligne (LD1, LD2) peut être fermé de chaque côté à tout moment.

11. Système permettant de réagencer des conducteurs en bon état inclus dans des lignes parallèles lors de la transmission d'énergie, les lignes parallèles comprenant au moins une première ligne (L1) et une deuxième ligne (L2) dont chacune inclut N conducteurs (1A, 1B, et 1C ; ou 2A, 2B, et 2C), N étant un nombre entier supérieur ou égal à 3, le système comprenant :
un premier commutateur de départ (OD1), disposé sur la première ligne (L1), chaque pôle du premier commutateur de départ (OD1) correspondant à un conducteur de la première ligne (L1), pour commander la première ligne (L1) de sorte qu'elle s'ouvre ou non ;
un deuxième commutateur de départ (OD2), disposé sur la deuxième ligne (L2), chaque pôle du deuxième commutateur de départ (OD2) correspondant à un conducteur de la deuxième ligne (L2), pour commander la deuxième ligne (L2) de sorte qu'elle s'ouvre ou non ;
un premier commutateur de ligne (LD1), disposé entre le premier commutateur de départ (OD1) et un disjoncteur/transformateur de courant de la première ligne (L1) ; et
un deuxième commutateur de ligne (LD2), disposé entre le deuxième commutateur de départ (OD2) et un disjoncteur/transformateur de courant de la deuxième ligne (L2),
dans lequel chacun des pôles du premier commutateur de ligne (LD1) correspond à un conducteur de la première ligne (L1), et chacun des pôles du deuxième commutateur de ligne (LD2) correspond à un conducteur de la deuxième ligne (L2), chacun des pôles du premier commutateur de ligne (LD1) correspond à un correspondant des pôles du deuxième commutateur de ligne (LD2), sachant que
le premier et le deuxième commutateur de ligne (LD1, LD2) sont disposés pour permettre une connexion entre la première ligne (L1) et la deuxième ligne (L2) par
connexion, lorsque N quelconques conducteurs en bon état (1B, 1C, 2C) non inclus dans une seule ligne sont sélectionnés parmi 2N conducteurs (1A, 1B, et 1C ; 2A, 2B, et 2C) inclus dans les deux lignes (L1, L2), chacun d'un ou de plusieurs conducteurs non sélectionnés (1 A) inclus dans la première ligne (L1) à un correspondant (2C) d'un ou de plusieurs conducteurs en bon état sélectionnés inclus dans la deuxième ligne (L2), de sorte qu'une ligne reconstruite puisse être formée moyennant les N conducteurs en bon état sélectionnés (1B, 1C, 2C).

12. Le système de la revendication 11, dans lequel le premier et le deuxième commutateur de ligne (LD1, LD2), et le premier et le deuxième commutateur de départ (OD1, OD2) sont unipolaires et commandables à distance.

13. Le système de la revendication 11 ou 12, comprenant en outre :
un premier dispositif de commande, disposé sur la première ligne, adapté pour commander le premier commutateur de ligne (LD1) et le premier commutateur de départ (OD1) ; et
un deuxième dispositif de commande, disposé sur la deuxième ligne, adapté pour commander le deuxième commutateur de ligne (LD2) et le deuxième commutateur de départ (OD2),
dans lequel le premier dispositif de commande et le deuxième dispositif de commande communiquent l'un avec l'autre pour commander les commutateurs (LD1, LD2, OD1, OD2) en coopération.

14. Le système de la revendication 13, dans lequel la communication entre le premier dispositif de commande et le deuxième dispositif de commande est effectuée via CEI 61650 Generic Objected-Oriented Substation Event (GOOSE) (événement générique de poste orienté objet), ou communication série/parallèle, ou Transmission Control Protocol/Internet Protocol (TCP/IP), ou câblage réel entre les dispositifs.

15. Le système de l'une quelconque des revendications 11 à 14, comprenant en outre une logique de verrouillage, adaptée pour être utilisée par chacun des dispositifs de commande pour garantir que
seul un pôle de chacun des commutateurs de ligne (LD1, LD2) peut être fermé de chaque côté à tout moment ;
chacun des disjoncteurs est ouvert avant que les commutateurs (LD1, LD2, OD1, OD2) sont actionnés ;
si le deuxième commutateur de ligne (LD2) est fermé, le disjoncteur de la deuxième ligne (L2) n'a pas le droit d'être fermé ; et
un pôle du premier commutateur de ligne (LD1) et un pôle du premier commutateur de départ (OD1) qui correspondent à un même conducteur de la première ligne (L1) n'ont pas le droit d'être fermés en même temps.
